# EUROPÄISCHE PATENTSCHRIFT

(11) **EP 2 061 357 B1**
(45) Veröffentlichungstag und Bekanntmachung des Hinweises auf die Patenterteilung: **11.11.2015**
(21) Anmeldenummer: 07803222.4
(22) Anmeldetag: 04.09.2007
(51) Int. Cl.: A47B 88/04, G01D 5/20, G01D 5/241

(54) **SENSORVORRICHTUNG EINER AUSSTOSSVORRICHTUNG FÜR MÖBELTEILE**
SENSOR DEVICE OF A DEPLOYMENT MECHANISM FOR FURNITURE PARTS
DISPOSITIF DÉTECTEUR D'UN DISPOSITIF DE DÉPLOIEMENT POUR PARTIES DE MEUBLES

(30) Priorität: 15.09.2006 DE 202006014407 U
(43) Veröffentlichungstag der Anmeldung: 27.05.2009
(73) Patentinhaber: Paul Hettich GmbH & Co. KG, 32278 Kirchlengern (DE)
(72) Erfinder: BEHNKE, Thomas, 32257 Bünde (DE)
(74) Vertreter: Dantz, Jan Henning
(86) Internationale Anmeldenummer: PCT/EP2007/059258
(87) Internationale Veröffentlichungsnummer: WO 2008/031748

(56) Entgegenhaltungen:
- EP-A- 0 561 378
- EP-A- 1 374 732
- DE-A1- 3 011 594
- DE-U1-202004 007 168
- DE-U1-202005 006 945
- GB-A- 972 316
- GB-A- 1 072 279

## Beschreibung

Die Erfindung betrifft eine Sensorvorrichtung nach dem Oberbegriff des Anspruchs 1, eine Ausstoßvorrichtung mit einer derartigen Sensorvorrichtung und ein Möbel mit einer Ausstoßvorrichtung.

Derartige Sensorvorrichtungen sind an sich bekannt. Lediglich beispielhaft seien insofern aus dem jüngeren Stand der Technik die DE 20 2005 006 945 U1 und die EP 1 374 732 A1 genannt, welche u.a. den Einsatz von Näherungssensoren mit kapazitiver oder induktiver Wirkung vorschlagen, ohne dass Vorschläge für eine konstruktive Realisierung der Sensorvorrichtungen gemacht würden.

Im praktischen Versuch hat sich herausgestellt, dass die Sensorvorrichtungen bekannter Ausstoßvorrichtungen insbesondere bei einem Einsatz an Möbelkorpussen, die im Bereich der Schubkastenanlage mit einer Dichtlippe versehen sind, nicht zu zufrieden stellenden Ergebnissen führen. Die Erfindung setzt bereits beim Erkennen des Problems an, dass die Auslösewege bekannter Sensorvorrichtungen zu groß sind und die erforderlichen Betätigungskräfte zu hoch.

Die Lösung dieses Problems ist die Aufgabe der Erfindung.

Die Erfindung löst diese Aufgabe durch den Gegenstand des Anspruchs 1.

Da die Sensorvorrichtung ein Gehäuse und einen relativ dazu beweglichen Sensorstößel aufweist, der mit wenigstens einem beweglichen Teil - nach einer Variante insbesondere einem Ferritkernteil - eines ansonsten ganz oder teilweise im Gehäuse unbeweglich stillstehend angeordneten Transformators oder Kondensators versehen/verbunden ist oder einen solchen ausbildet, werden auch kleinste Betätigungshübe sicher erfasst, so dass selbst eine kurze und leichte Bewegung von Möbelteilen gegen die Wirkung einer elastischen Dichtlippe dazu ausreicht, den Sensor auszulösen. Der Begriff des Gehäuses ist nicht zu eng auszulegen. Er umfasst auch ähnliche Basiselemente wie Platten. Dabei unterschreitet der detektierbare Sensorhub nach einer bevorzugten Ausgestaltung nicht eine vorgegebene untere Grenzschwelle, die so eingestellt wird, dass das System nicht zu empfindlich wird.

Vorzugsweise ist die Bewegungsrichtung des Sensorstößels parallel oder zumindest angenähert parallel zur Öffnungs- oder Schließrichtung des beweglichen Möbelteils, da in dieser Richtung besonders gut Tippbewegen auf das bewegliche Möbelteil ausgeübt werden können, die selbst bei Schubkästen mit Dichtlippen am Schubkasten oder Möbel dazu ausreichen, die Öffnungsbewegung zu initiieren, wenn eine erfindungsgemäße Sensorvorrichtung eingesetzt wird.

So ist die Sensorvorrichtung vorzugsweise dazu ausgelegt, einen Betätigungshub von weniger als 1/10 mm, insbesondere von weniger als 5/100 mm, insbesondere von weniger als 2/100 mm zu detektieren. Bisher wurden derartige Betätigungswege am Möbel nicht sensiert, da man glaubte, das System werde zu empfindlich gegen Fehlsensierungen z.B. bei Erschütterungen. Nach der Erfindung ist es aber doch vorteilhaft, solch kleine Wege z.B. bei Möbeln mit elastischen Dichtungen am beweglichen Möbelteil einzusetzen.

Dabei ist es ferner zweckmäßig, wenn der Betätigungsstößel zum Zwecke der Realisierung einer definierten Bewegung vorzugsweise über eine Stützplatte federnd im Gehäuse der Sensorvorrichtung abgestützt ist.

Nach einer besonders bevorzugten Variante ist direkt am Betätigungsstößel ein Justiermittel, vorzugsweise mit Gewinde, insbesondere eine Justierschraube, vorzugsweise eine Madenschraube, angeordnet, um derart auf einfache Weise die axiale Länge und damit den Ansprechort der Sensorvorrichtung am Möbel (Auslöseweg) einstellen und/oder diesen grob justieren zu können. Eine Feinjustierung erübrigt sich, da der Sensor über seinen gesamten Betätigungsweg empfindlich ist und für eine Auslösung ein Bruchteil des vom Betätigungsstößel zurücklegbaren Wegs ausreicht.

Vorteilhafte Ausgestaltungen sind den Unteransprüchen zu entnehmen.

Nachfolgend wird die Erfindung unter Bezug auf die Zeichnung anhand von Ausführungsbeispielen näher beschrieben. Es zeigt:
- Fig. 1: eine perspektivische Ansicht eines Abschnittes eines Möbelteils mit einem beweglichen Schubkasten und einer Ausstoßvorrichtung ohne dargestellte Rückwand;
- Fig. 2: eine Ansicht der Anordnung aus Fig. 1 von hinten;
- Fig. 3: eine Ansicht der Anordnung aus Fig. 1 und 2 mit eingeschobenem Schubkasten von oben;
- Fig. 4a und b: eine perspektivische Ansicht und eine Seitenansicht einer induktiv arbeitenden Sensorvorrichtung;
- Fig. 5: eine Sprengansicht der Sensorvorrichtung aus Fig. 4a;
- Fig. 6a und b: die Sensorvorrichtung aus Fig. 4 und 5 in verschiedenen Betriebsstellungen;
- Fig. 7: eine Sprengansicht einer kapazitiv arbeitenden Sensorvorrichtung;
- Fig. 8: eine Seitenansicht und eine Draufsicht auf eine Ausstoßvorrichtung mit einer Sensorvorrichtung; und
- Fig. 9: eine perspektivische Ansicht einer weiteren kapazitiv arbeitenden Sensorvorrichtung;
- Fig. 10, 11: Sprengansichten der Sensorvorrichtung aus Fig. 9.

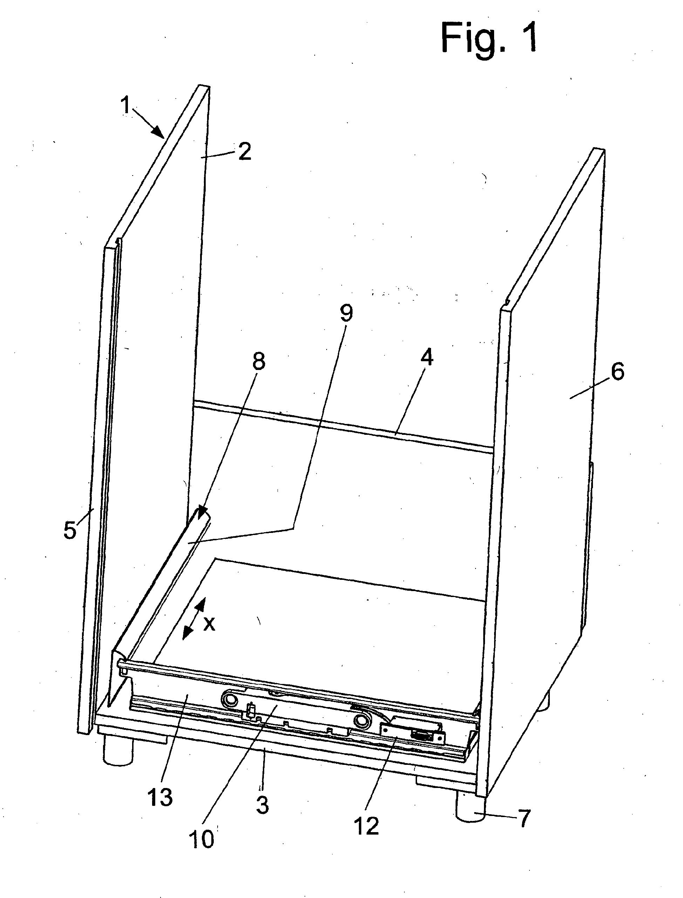

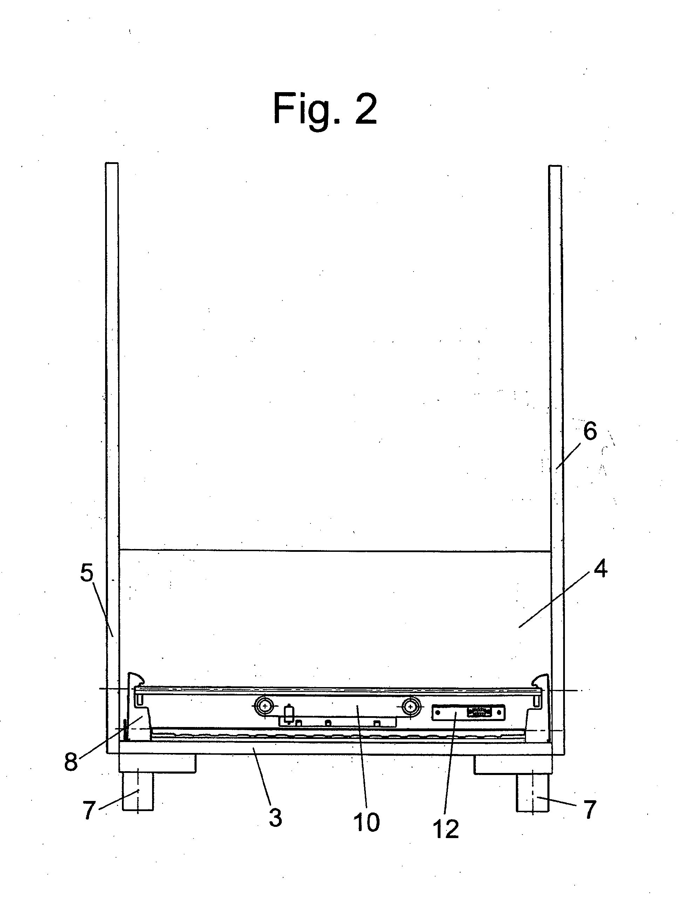

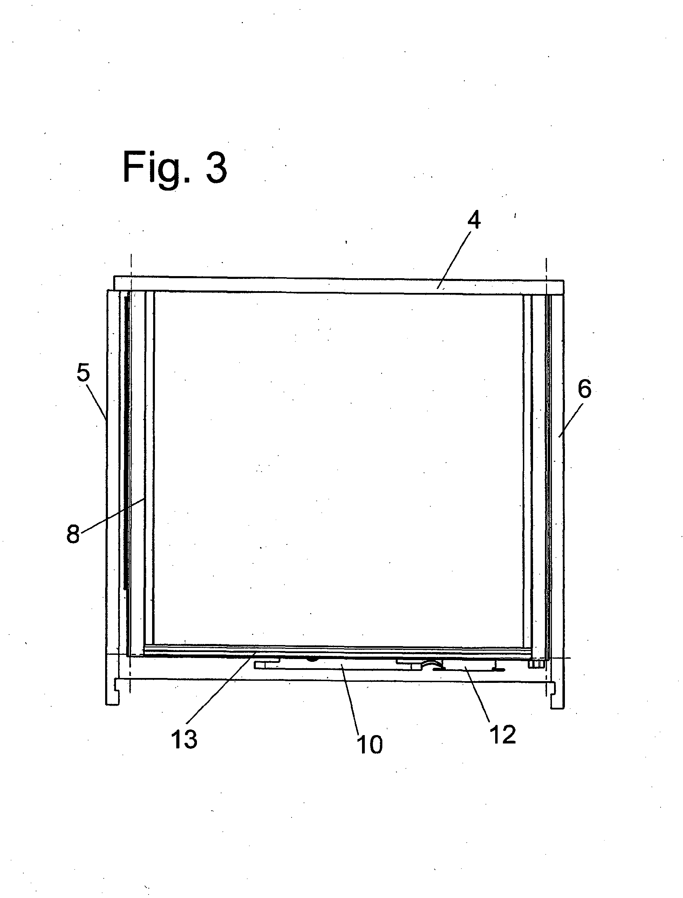

Fig. 1 bis 3 zeigen jeweils in verschiedener Ansicht ein Möbelteil 1 mit einem Möbelkorpus 2, von dem hier nur einige seiner Wände dargestellt sind, so eine Unterwand 3, Seitenwände 5, 6 und Möbelfüße 7.

In dem Möbelkorpus 2 ist ein bewegliches Möbelteil angeordnet, welches hier als nur schematisch dargestellter, verschieblicher Schubkasten 8 mit einer Frontblende 4 ausgebildet ist, wozu zwischen Zargen 9 des Schubkastens 8 und dem Möbelkorpus eine (hier nicht dargestellte) Auszugsschienenanordnung ausgebildet sein kann.

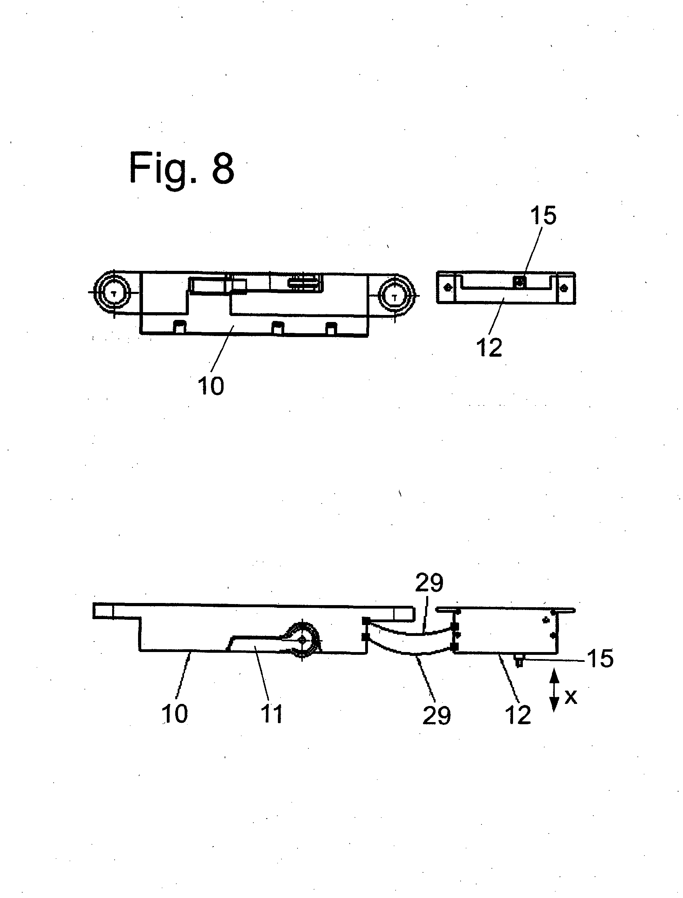

Das Öffnen des Schubkastens 8 wird von einer elektromotorischen oder elektromagnetischen Ausstoßvorrichtung 10 unterstützt, die hier beispielhaft einen Ausstoßhebel 11 und eine mit der Ausstoßvorrichtung gekoppelte Sensorvorrichtung 12 (siehe auch Fig. 8) aufweist, die zur Sensierung eines Betätigungshubes X ausgelegt ist, der in der Regel von der Frontblende 4 des Schubkastens 8 her auf den Schubkasten 8 ausgeübt wird. Die Ausstoßvorrichtung 10 und die Sensorvorrichtung 12 bilden bevorzugt zwei getrennte Einheiten aus, denkbar ist es aber auch, die Sensorvorrichtung 12 und die Ausstoßvorrichtung 10 zu einer baulichen Einheit zusammenzufassen.

Diese Anordnung dient dazu, die Öffnungsbewegung des Schubkastens 8 nach einem leichten Antippen oder Ziehen des Schubkastens 8 zumindest über einen Teil des Ausziehweges zu unterstützen.

Die Ausstoßvorrichtung 10 ist zwischen der innenseitigen Korpus-Rückwand (hier nicht zu erkennen) und der Schubkastenrückwand 13 angeordnet, wobei sie bevorzugt an der Korpus-Rückwand (hier nicht dargestellt) befestigt ist.

Der Sensorvorrichtung ist eine Elektronikschaltung zugeordnet, die vorzugsweise auf einer Platine 30 angeordnet ist.

Sie umfasst einerseits die Funktion und ggf. Bauelemente einer Auswertungsvorrichtung bzw. -schaltung und andererseits die Funktion und ggf. Bauelemente einer Steuerungsvorrichtung bzw. -schaltung, wobei zur Elektronik vorzugsweise ein Mikroprozessor/-controller 31 gehört.

Die Elektronikschaltung gibt nach dem Sensieren einer Auslösung ein Signal an die Ausstoßvorrichtung ab und steuert diese damit in Abhängigkeit vom Ausgangssignal des eigentlichen Sensors an. Sie kann in das Gehäuse der Sensorvorrichtung 12 oder alternativ auch in die Ausstoßvorrichtung bzw. deren Gehäuse integriert sein. In das Gehäuse 14 der Sensorvorrichtung kann zudem eine Auswertungsvorrichtung integriert sein, die auch Bestandteil der Steuerungsvorrichtung oder mit dieser verbunden sein kann.

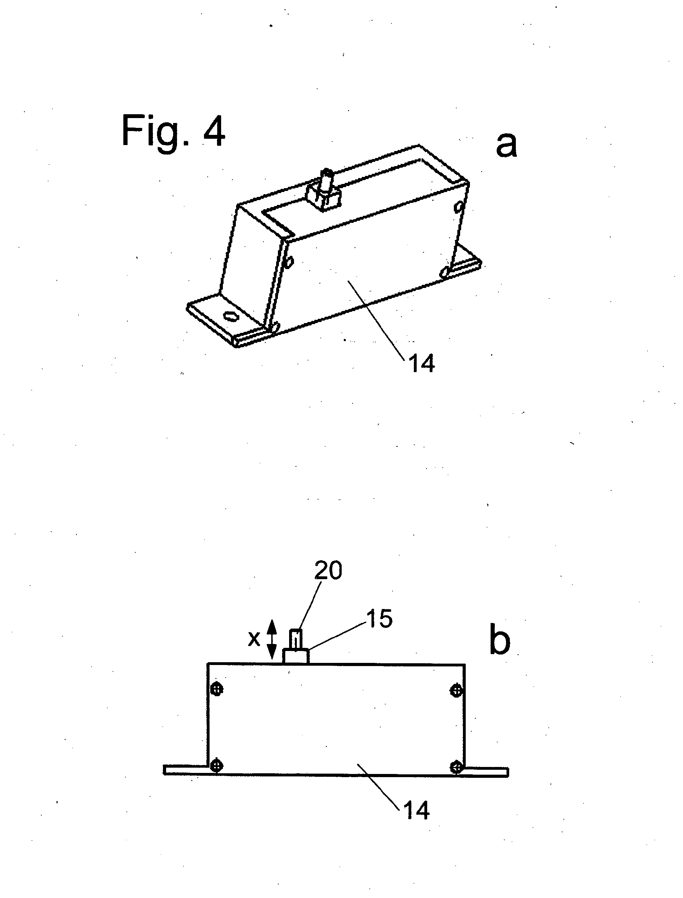

Wie in Fig. 4 ff gut zu erkennen, weist die Sensorvorrichtung 12 ein Gehäuse 14 auf, das stillstehend an der Korpusrückwand befestigt ist, und einen relativ zum Gehäuse 14 beweglichen Sensorstößel 15, welcher auf der zum Schubkasten 8 gewandten Seite des Gehäuses 14 angeordnet ist und an den Schubkasten 8 im geschlossenen Zustand anstößt, so dass der federnd abgestützte Sensorstößel 15 Bewegungen des Schubkastens 8 im geschlossenen Zustand folgt.

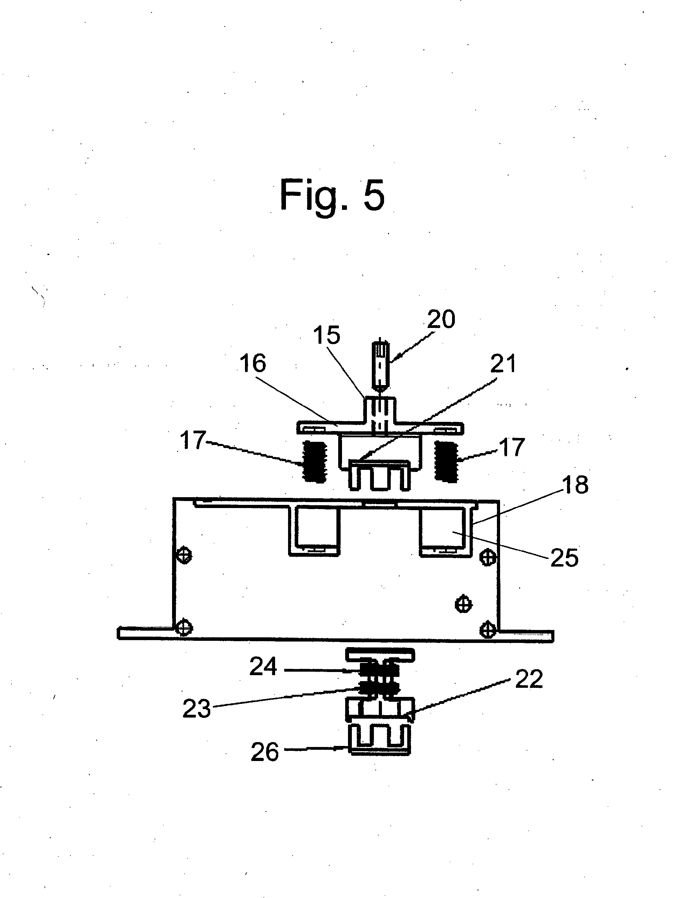

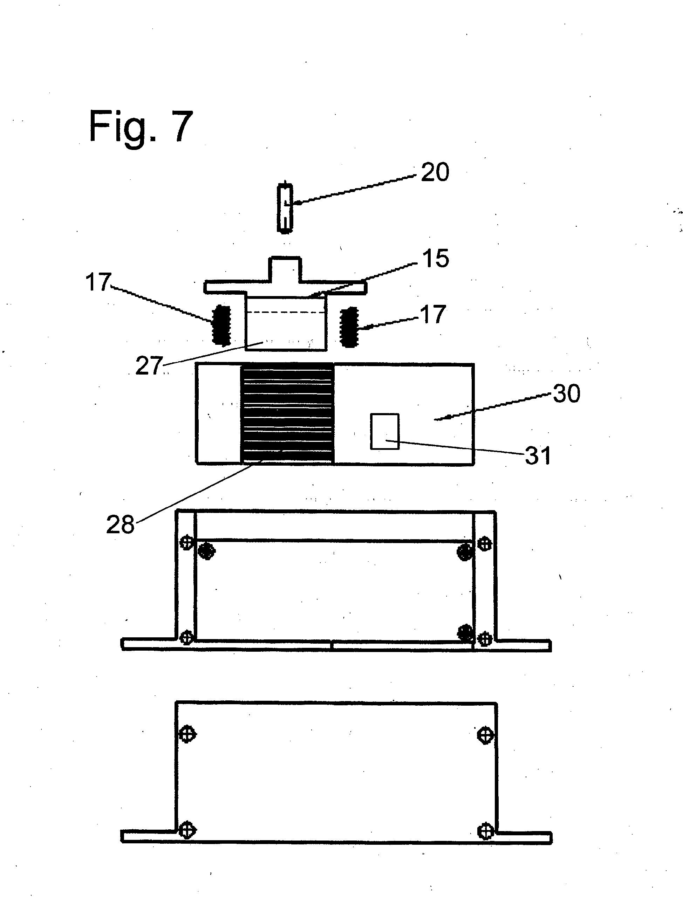

Nach Fig. 4 und 5 ist die Sensorvorrichtung 12 als induktiver Sensor ausgebildet. Nach Fig. 7 wird bei hier gleicher äußerlicher Gestaltung und Abmessung eine kapazitive Variante geschaffen.

Der Sensorstößel 15 ist dazu hier senkrecht auf einer Stützplatte 16 angeordnet oder ausgebildet, welche über wenigstens eine oder hier mehrere Federn 17 in einer Ausnehmung 18 des Gehäuses abgestützt ist.

Im montierten Zustand liegt der Sensorstößel 15 an der Rückwand 13 des Schubkastens an oder ist mit dieser verbunden. Der Sensorstößel 15 ist zudem vorzugsweise parallel/axial zur Betätigungsrichtung X des Schubkastens 8 linear beweglich angeordnet.

Auf diese Weise wird ein Betätigungshub oder ein Betätigungszug, welcher in Richtung +X oder -X auf den Schubkasten 8 aus dessen Ruhelage in geschlossener Position ausgeübt wird, direkt auf die Sensorvorrichtung 12 bzw. deren Sensorstößel 15 übertragen, sofern eine Grobjustierung des Sensorstößels bei der Montage erfolgt ist.

Die Sensorvorrichtung 12 gibt bei einer Veränderung der Lage des Sensorstößels 15 relativ zum Gehäuse 14 mit einem Betätigungsweg von z.B. weniger als 0,01 mm, vorzugsweise weniger als 0,005 mm ein von der Steuerungseinrichtung verarbeitbares Signal ab. Dieses ist nach der Auswertung vorzugsweise ein digitales Signal (0/1), das eindeutig das Vorliegen eines Betätigungshubes signalisiert.

Ein definierter Abstand zwischen der Schubkastenrückwand 13 und dem Sensorstößel 15 im eingeschobenen Zustand kann durch Softwareverfahren oder mechanisch z.B. mit einer einem Justiermittel, insbesondere mit Gewinde versehen, insbesondere einer Justierschraube - vorzugsweise einer Madenschraube 20 - eingestellt werden. So ist es denkbar, das freie Ende des Sensorstößels 15 selbst als die Madenschraube 20 auszubilden, um deren Länge zu verändern.

In Ruhestellung liegt der Stößel 15 so an der Schubkastenrückwand 13 an, dass er bezogen auf seinen möglichen Gesamthub einen Teilweg eingeschoben ist, der größer ist als der zur Erkennung mindestens erforderliche Weg bzw. Betätigungshub. Diese Position wird jeweils nach dem Einschieben des Schubkastens als Nullpunkt definiert, von dem aus der jeweilige Betätigungsweg bestimmt wird.

Die Betätigung der Sensorvorrichtung erfolgt derart über den federnd gelagerten Betätigungs- bzw. Sensorstößel, an dessen einem Ende vorzugsweise die Madenschraube 20 zur Veränderung der axialen Länge dieses Elementes angeordnet ist. Das andere Ende ist mit einem Ferritkern 21 versehen.

Im Gehäuse ist ein Spulenkörper 22 festgelegt, der nach Art eines Transformators zwei axial zueinander beabstandete Spulen trägt, von denen eine als Primärwicklung 23 dient und die andere als Sekundärwicklung 24. Der Spulenkörper 22 kann im Gehäuse 14 beispielsweise auf einer Leiterplatte 30 angeordnet sein, die vorzugsweise auch Elektronikschaltung mit der Auswertungsvorrichtung und der Ansteuerungseinrichtung zur Ausgabe eines Signals an die Ausstoßvorrichtung trägt.

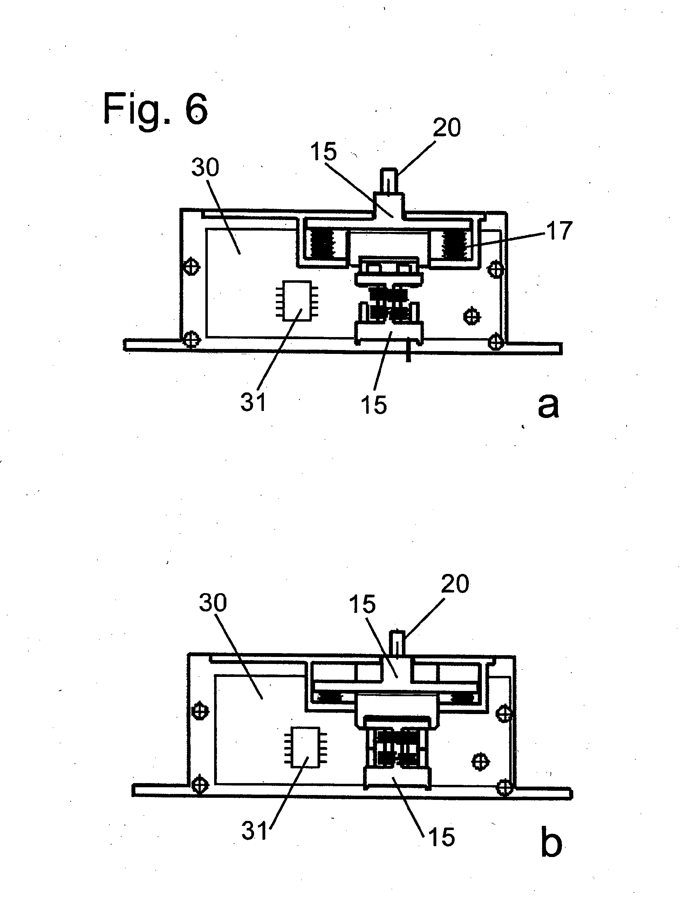

Der Ferritkern 21 ist auf der vom Betätigungsstößel abgewandten Seite der Stützplatte 16 angeordnet. Dabei ist die Anordnung derart, dass der Ferritkern 21 bzw. die Ferritkernhälfte 21 bei Bewegungen des Betätigungsstößels 15 dessen Bewegungen folgt und je nach Betätigungsweg verschieden weit in den Spulenkörper in den Bereich der Sekundärspule 24 eintauchen kann, so dass die Eindringtiefe in den Spulenkörper 15 dem Betätigungshub entspricht bzw. - beim Vorhandensein einer Übersetzung - von diesem abhängt. Fig. 6b zeigt den eingefahrenen Zustand (angetippter Schubkasten) und Fig. 6a den ausgefahrenen Zustand (nicht angetippter Schubkasten 8), wobei hier der maximale Hub dargestellt ist. Zum Auslösen reicht ein wesentlich geringerer Hub.

Die Primärwicklung 23 ist von einer weiteren Ferritkern(hälfte) 26 umschlossen. Die Sekundärwicklung 24 erhält ihren magnetischen Feldschluss dagegen durch den eintauchenden Ferritkern 21. Der Gesamtferritkern besteht damit aus Ferritkernteilen 21, 26, die relativ zueinander beweglich sind.

Die Bauelemente Primärwicklung 23, Sekundärwicklung 24 und Ferritkernteile 21, 26 bilden damit einen Transformator aus, dessen Luftspalt und damit Kopplungsfaktor von der Bewegung des Betätigungsstößels 15 abhängt.

Im Betrieb wird die die Primärwicklung 22 von der Steuerungsvorrichtung vorzugsweise mit einer hochfrequenten Wechselspannung beaufschlagt. Die in der Sekundärwicklung induzierte Wechselspannung ist in ihrer Signalamplitude von der Eindringtiefe des Betätigungsstößels abhängig.

Vorzugsweise nach einer Gleichrichtung der Sekundärspannung wird diese der Auswertungs- und Steuerungseinrichtung mit einer D/A-Wandlereinheit zugeführt, wobei die Auswertungsschaltung über ein Auswertungs- und Steuerungsprogramm ggf. über geeignete Algorithmen Störungen wie Klopfgeräusche, elektromagnetische Störungen, Dauerbetätigungen oder Erschütterungen von gewollten Betätigungen unterscheidet. Diese Auswertung erfolgt vorzugsweise von einem Einchipcontroller 31, der sich auf der Leiterplatte im Sensorgehäuse befindet. Ebenso befindet sich die Ansteuerung der Primärwicklung auf dieser Platine.

Derart wird eine induktiv arbeitende Sensorvorrichtung realisiert.

Fig. 7 zeigt dagegen ein Beispiel einer kapazitiv arbeitenden Sensorvorrichtung.

Auch hier ist der Sensorstößel 15 senkrecht auf der Stützplatte 16 angeordnet oder ausgebildet, welche über wenigstens eine oder hier mehrere Federn 17 in der Ausnehmung 18 des Gehäuses abgestützt ist.

Der Betätigungsstößel 15 weist auf seiner von der Stützplatte abgewandten Seite eine bewegliche Metallfläche 27 z.B. aus Kupfer auf, die vorzugsweise parallel zu einer im Gehäuse stillstehenden Metallfläche 28 ausgerichtet ist. Vorzugsweise sind die Metallflächen 27, 28 eben. Die zueinander beabstandeten Metallflächen 27, 28 bilden im Zusammenspiel einen Plattenkondensator aus. Alternative Ausgestaltungen (z.B. zwei konzentrische metallische Röhrchen) sind denkbar.

Eine der Metallflächen 27 ist insbesondere parallel zur weiteren Metallfläche 28 beweglich angeordnet, so dass sich der Bereich der Metallflächen, in denen sich diese überdecken, veränderlich ist. Im Überdeckungsbereich ist eine Wegänderung des Betätigungsstößels 15 sensierbar, denn es wird ein Kondensator mit vom Hub/Weg X des Schubkastens und Betätigungsstößels abhängigen veränderlichen Eigenschaften gebildet, solange sich die Metallflächen 27, 28 überlappen.

Die Metallfläche 28 ist im Gehäuse fixiert und die andere im Gehäuse verschieblich. Die stillstehende Metallfläche (dunkel angedeutet) ist wiederum Bestandteil einer Leiterplatte 30, vorzugsweise mit den weiteren Bauelementen der Elektronikschaltung (z.B. dem Mikrochip 31), sein kann. Derart wird ein veränderlicher Plattenkondensator gebildet, dessen Kapazität abhängig von der Eindringtiefe des Betätigungsstößels ist. Derart wird der Weg des Betätigungsstößels 15 und damit des Schubkastens sensierbar. Die Signalauswertung kann analog zu der induktiven Sensorvorrichtung beschriebener Vorgehensweise erfolgen.

Fig. 8 veranschaulicht noch die bevorzugte kompakte, separate Anordnung der Elemente Sensorvorrichtung 12 und Ausstoßvorrichtung 10 nebeneinander - beabstandet zueinander - am Möbel, wobei hier eine elektrische Verbindung 29 zwischen diesen Baueinheiten besteht, die zumindest zwei Leiter aufweist, die Signale übertragen und ggf. auch zur Energieversorgung der Sensorvorrichtung genutzt werden kann. Die Kopplung der Bauelemente (Signal- und ggf. Energieversorgung) erfolgt vorzugsweise über Steckverbinder (letztere hier nicht dargestellt).

Es liegt auch im Bereich der Erfindung, die Sensorvorrichtung in das Gehäuse der Ausstoßvorrichtung 10 zu integrieren und dann vorzugsweise die Auswertungsvorrichtung/Ansteuerungselektronik der Ausstoßvorrichtung auch für die Aufgaben der Elektronik der Sensorvorrichtung zu nutzen/auszulegen.

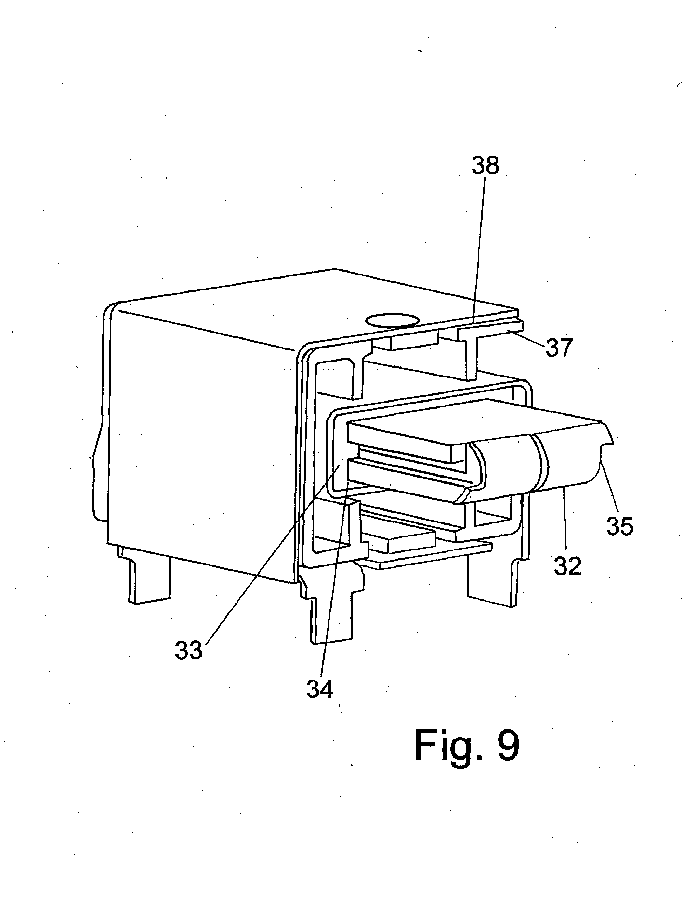

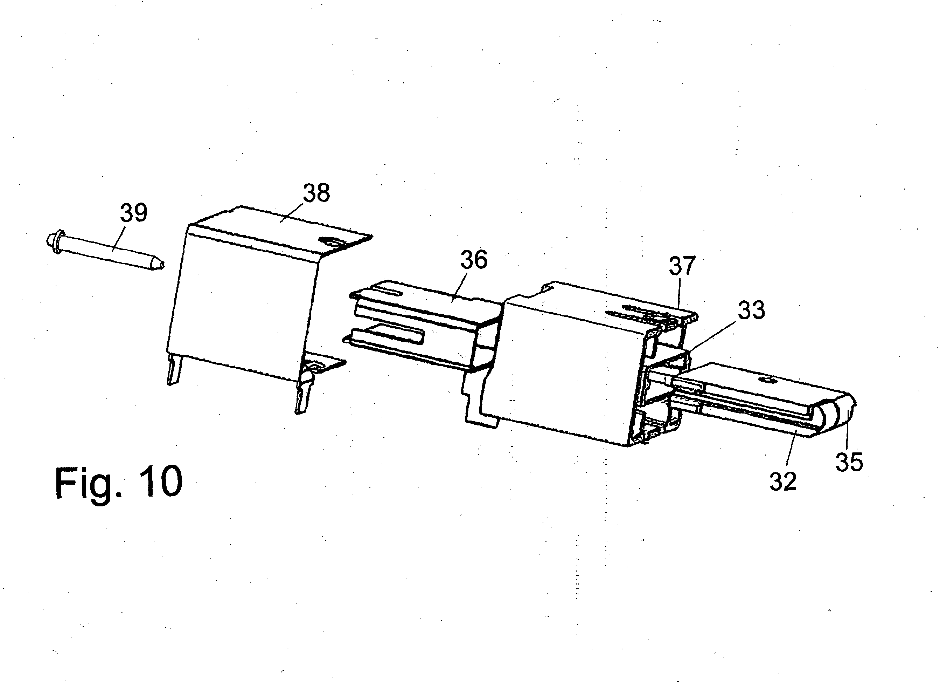

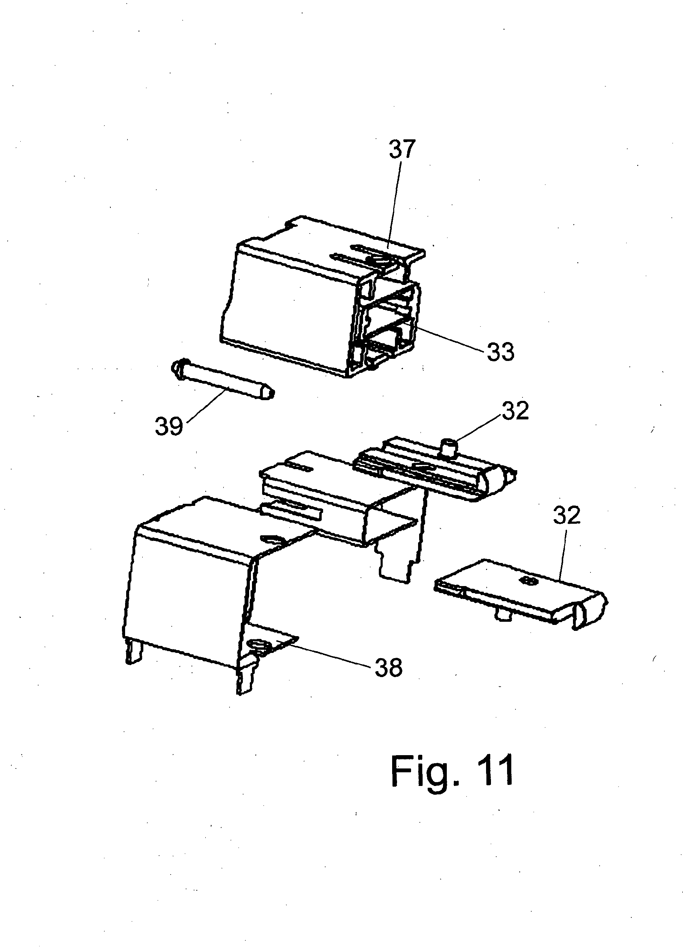

Fig. 9 bis 11 zeigen ein weiteres Ausführungsbeispiel der Erfindung, die als weitere kapazitive Sensorvorrichtung ausgebildet ist.

Diese Sensorvorrichtung weist wiederum zwei Kondensatorteile auf, von denen hier eines - der Betätigungsstößel - als beweglicher Schieber 32 ausgebildet ist, der in einem Gehäuse 33 - hier ein gehäuseartiges Kunststoffteil 33 - mit einem Schlitz 34 beweglich - hier verschieblich - aufgenommen ist.

Der Schieber 32 kann vorteilhaft als Stanz-Biegeteil aus Blech ausgebildet sein, dass z.B. aus einem gestanzten Blechstreifen im Wesentlichen doppeltlagig gebogen ist, wobei der Bereich einer Biegung 35 vorzugsweise im Betrieb am beweglichen Möbelteil zur Anlage kommt.

Das zweite - stillstehende Kondensatorteil 36 - ist am Gehäuse 33 unbeweglich angeordnet. Vorzugsweise bildet es einen Winkel oder es umgibt das Gehäuse 33 ringartig oder nahezu ringartig. Es kann aus einem Blechstreifen gebildet sein, der um das Gehäuse gefaltet bzw. gebogen ist. Die Anordnung ist vorzugsweise derart, dass der Schieber 32 im Falle der Betätigung mit gleichmäßigem Abstand zur inneren Oberfläche in das Gehäuse 33 eintaucht.

Die bisher beschriebenen Bauteile des Kondensators können in einem zu wenigstens einer Seite hin offenen Übergehäuse 37 angeordnet sein, das vorzugsweise außen mit einem Schirmelement 38 versehen ist, dass hier als winkliges Schirmblech ausgebildet ist.

Das Gehäuse 33 und das Übergehäuse 37 können einstückig miteinander verbunden sein.

Das Gehäuse 33 kann als Dielektrikum zwischen den beiden Kondensatorteilen wirken. Es kann auch ein Spalt verbleiben, so dass die Luft als Dielektrikum genutzt wird.

Der Abstand zwischen dem Schirmelement 38 und den Kondensatorteilen ist so gewählt, dass die Kapazität des Kondensators nur unwesentlich beeinträchtigt wird.

Der Schieber 32 als inneres Kondensatorelement ist vorzugsweise mit dem äußeren Schirmelement 38 über eine in den Schieber 32 eingebaute Federanordnung 39 oder in sonstiger Weise an diesem vorgesehene Federanordnung 39 leitend verbunden

Damit beim Eindrücken des Schiebers 32 die Federanordnung 39 nicht ausgelenkt werden kann, wird diese zusätzlich über einen Stift geführt. Der Stift ist in einer Bohrung im Schirmblech 38 aufgenommen und daher mit diesem ebenfalls elektrisch verbunden, was der Abschirmung von Störstrahlungen dient.

Der Schieber 32 kann ein- oder mehrteilig ausgestaltet sein. Ein Vorteil eines mehrteiligen, insbesondere eines zweiteiligen, Schiebers 32 (aus vorzugsweise zwei gleich geformten Teilen) besteht darin, dass die Federanordnung 39 beim Zusammensetzen in der vorgesehenen Bohrung fixiert werden kann und dass die Möglichkeit gegeben ist, die innere Oberfläche der Bohrung vor der Montage mit einer besser leitfähigen Oberfläche (vorzugsweise Nickel) zu veredeln.

Es ist auch denkbar, insbesondere bei einer zweitteiligen Schieberkonstruktion, dass der innere Schieber 32 aus Kunststoff besteht, der z.B. mit einer leitenden Oberfläche versehen ist.

Alternativ ist es denkbar, das innere Kondensatorteil fest einzubauen und das äußere Kondensatorblech beweglich gestalten (hier nicht dargestellt).

Nach den Fig. 9 bis 11 wird auf einfache Weise eine kostengünstig herstellbare Sensorvorrichtung geschaffen, die sich durch eine besonders gute Funktion auszeichnet. Sie ist kompakt aufgebaut und gut in ein Möbel integrierbar.

### Bezugszeichen

- Möbelteil: 1
- Möbelkorpus: 2
- Unterwand: 3
- Frontblende: 4
- Seitenwände: 5, 6
- Möbelfüße: 7
- Schubkasten: 8
- Zargen: 9
- Ausstoßvorrichtung: 10
- Ausstoßhebel: 11
- Sensorvorrichtung: 12
- Schubkastenrückwand: 13
- Gehäuse: 14
- Sensorstößel: 15
- Stützplatte: 16
- Federn: 17
- Ausnehmung: 18
- Madenschraube: 20
- Ferritkernteil: 21
- Spulenkörper: 22
- Primärwicklung: 23
- Sekundärwicklung: 24
- Ferritkernteil: 26
- Metallfläche: 27
- Metallfläche: 28
- Leiter: 29
- Leiterplatte: 30
- Mikroprozessor: 31
- Schieber: 32
- Gehäuse: 33
- Schlitz: 34
- Biegung: 35
- Kondensatorteil: 36
- Übergehäuse: 37
- Schirmelement: 38
- Federanordnung: 39

- Betätigungshub: X

## Patentansprüche

1. Möbel mit einer Ausstoßvorrichtung und mit einer Sensorvorrichtung zur Sensierung einer Bewegung eines relativ zu einem stillstehenden Möbelkorpus (2) beweglichen Möbelteils (1) zur Ansteuerung der Ausstoßvorrichtung (10) für das bewegliche Möbelteil, **dadurch gekennzeichnet, dass**
a. die Sensorvorrichtung ein Gehäuse (14) und einen relativ dazu beweglichen Sensorstößel (15) aufweist, der mit wenigstens einem beweglichen Teil eines ansonsten ganz oder teilweise im Gehäuse (14) unbeweglich stillstehend angeordneten Transformators oder Kondensators versehen ist oder einen solchen ausbildet, und
b. der Sensorstößel (15) parallel oder zumindest angenähert parallel zur Öffnungs- oder Schließrichtung des beweglichen Möbelteils (1) am Gehäuse (14) der Sensorvorrichtung (12) beweglich ist.

2. Möbel mit einer Ausstoßvorrichtung und mit einer Sensorvorrichtung nach Anspruch 1, **dadurch gekennzeichnet, dass**
- das bewegliche Möbelteil ein Schubkasten (8)ist
- die Ausstoßvorrichtung (10) und die Sensorvorrichtung getrennt voneinander zwischen der Rückwand (13) des Schubkastens und der Rückwand (4) des Möbelkorpus angeordnet sind oder dass die Sensorvorrichtung in das Gehäuse der Ausstoßvorrichtung integriert ist,
- der Sensorstößel (15) parallel oder zumindest angenähert parallel zur Ausziehrichtung des Schubkastens am Gehäuse (14) der Sensorvorrichtung (12) beweglich ist, und
- die Sensorvorrichtung (12) zur Sensierung eines Betätigungshubes X ausgelegt ist, der von einer Frontblende des Schubkastens her auf den Schubkasten (8) ausgeübt ist, und
- dass das Gehäuse (14) stillstehend an der Korpusrückwand befestigt ist und dass der relativ zum Gehäuse (14) bewegliche Sensorstößel (15) auf der zum Schubkasten gewandten Seite des Gehäuses (14) angeordnet ist und an den Schubkasten im geschlossenen Zustand anstößt, so dass der Sensorstößel Druck- oder Zugbewegungen des Schubkastens (8) im geschlossenen Zustand folgt.

3. Möbel mit einer Ausstoßvorrichtung und mit einer Sensorvorrichtung nach Anspruch 1 oder 2, **dadurch gekennzeichnet, dass** die Sensorvorrichtung (12) zur Sensierung eines Betätigungshubs von weniger als 1/10 mm, vorzugsweise weniger als 5/100 mm, insbesondere von weniger als 2/100 mm ausgelegt ist.

4. Möbel mit einer Ausstoßvorrichtung und mit einer Sensorvorrichtung nach einem der vorstehenden Ansprüche, **dadurch gekennzeichnet, dass** der Sensorstößel (15) vorzugsweise über eine Stützplatte (16) federnd im Gehäuse (14) der Sensorvorrichtung (12) abgestützt ist.

5. Möbel mit einer Ausstoßvorrichtung und mit einer Sensorvorrichtung nach einem der vorstehenden Ansprüche, **dadurch gekennzeichnet, dass** am Sensorstößel ein Justiermittel (20), insbesondere über Gewinde verstellbar, angeordnet ist.

6. Möbel mit einer Ausstoßvorrichtung und mit einer Sensorvorrichtung nach einem der vorstehenden Ansprüche, **dadurch gekennzeichnet, dass** das Justiermittel (20) an dem freien Ende bzw. am dem zum beweglichen Möbelteil gewandten Ende des Sensorstößels (15) zur Veränderung der axialen Länge dieses Elementes angeordnet ist.

7. Möbel mit einer Ausstoßvorrichtung und mit einer Sensorvorrichtung nach einem der vorstehenden Ansprüche, **dadurch gekennzeichnet, dass** der Sensorstößel (15) als bewegliches Teil der Spule direkt oder an einer Stützplatte (16) einen Ferritkernteil (21) aufweist und dass im Gehäuse (14) ein Spulenkörper (22) festgelegt ist, der nach Art eines Transformators zwei axial zueinander beabstandete Spulen trägt, von denen eine als Primärwicklung (23) dient und die andere als Sekundärwicklung (24), wobei die Primärwicklung (23) von einem weiteren Ferritkernteil (26) umschlossen ist und wobei die Anordnung derart ist, dass die Sekundärwicklung (24) ihren magnetischen Feldschluss durch den eintauchenden Ferritkernteil (21) erhält und wobei die Bauelemente Primärwicklung (23), Sekundärwicklung (24) und Ferritkernteile (21, 26) einen Transformator ausbilden, dessen elektromagnetische Eigenschaften von der Eindringtiefe des Ferritkerns (21) an dem Sensorstift (15) abhängen.

8. Möbel mit einer Ausstoßvorrichtung und mit einer Sensorvorrichtung nach einem der vorstehenden Ansprüche, **dadurch gekennzeichnet, dass** der stillstehende Teil des Spulenkörpers im Gehäuse (14) auf einer Leiterplatte (30) angeordnet ist, die vorzugsweise auch eine Elektronikschaltung mit einer Steuerungsvorrichtung und einer Auswertungsvorrichtung zur Ausgabe eines Signals an die Ausstoßvorrichtung trägt.

9. Möbel mit einer Ausstoßvorrichtung und mit einer Sensorvorrichtung nach einem der vorstehenden Ansprüche, **dadurch gekennzeichnet, dass** der Ferritkern aus Ferritkernteilen (21, 26) besteht, die relativ zueinander beweglich sind.

10. Möbel mit einer Ausstoßvorrichtung und mit einer Sensorvorrichtung nach einem der vorstehenden Ansprüche, **dadurch gekennzeichnet, dass** die Primärwicklung (23) im Betrieb vorzugsweise mit einer hochfrequenten Wechselspannung beaufschlagbar ist, so dass eine in der Sekundärwicklung (24) induzierte Wechselspannung in ihrer Signalamplitude von der Eindringtiefe des Sensorstößels abhängig ist.

11. Möbel mit einer Ausstoßvorrichtung und mit einer Sensorvorrichtung nach einem der vorstehenden Ansprüche, **dadurch gekennzeichnet, dass** der Sensorstößel (15) als bewegliches Teil des Kondensators eine Metallfläche (27) aufweist, die relativ zu - vorzugsweise parallel zu - einer im Gehäuse fixierten Metallfläche (28) beweglich ist.

12. Möbel mit einer Ausstoßvorrichtung und mit einer Sensorvorrichtung nach einem der vorstehenden Ansprüche, **dadurch gekennzeichnet, dass** der Kondensator ein veränderlicher Plattenkondensator ist, dessen Kapazität von dem Überdeckungsbereich der beiden Metallplatten (27, 28) abhängt.

13. Möbel mit einer Ausstoßvorrichtung und mit einer Sensorvorrichtung nach einem der vorstehenden Ansprüche, **dadurch gekennzeichnet, dass** der stillstehende Teil des Kondensators im Gehäuse (14) auf einer Leiterplatte (30) angeordnet ist, die vorzugsweise auch eine Elektronikschaltung mit einer Steuerungsvorrichtung und einer Auswertungsvorrichtung bzw. - schaltung zur Ausgabe eines Signals an die Ausstoßvorrichtung trägt.

14. Möbel mit einer Ausstoßvorrichtung und mit einer Sensorvorrichtung nach einem der vorstehenden Ansprüche, **dadurch gekennzeichnet, dass** der Kondensator einen Schieber (32) als Sensorstößel und erstes Kondensatorteil und ein zweites Kondensatorteil (36) aufweist, wobei der Schieber (32) als erstes Kondensatorteil in einem Gehäuse (33) mit einem Schlitz (34) beweglich aufgenommen ist und das Gehäuse (33) von dem zweiten Kondensatorteil (36) ganz oder teilweise eingefasst ist.

15. Möbel mit einer Ausstoßvorrichtung und mit einer Sensorvorrichtung nach Anspruch 14, **dadurch gekennzeichnet, dass** der Schieber als das erste Kondensatorteil ein Gehäuse einfasst, wobei er am Gehäuse verschieblich ist und dass das zweite Kondensatorteil in dem Gehäuse angeordnet ist.

16. Möbel mit einer Ausstoßvorrichtung und mit einer Sensorvorrichtung nach Anspruch 14 oder 15, **dadurch gekennzeichnet, dass** das erste und/oder das zweite Kondensatorteil (32, 36) als Stanz-Biegeteile aus Blech ausgebildet sind und dass das erste und das zweite Kondensatorteil (32, 36) und das Gehäuse (33) in einem zu wenigstens einer Seite hin offenen Übergehäuse (37) angeordnet sind.

17. Möbel mit einer Ausstoßvorrichtung und mit einer Sensorvorrichtung nach Anspruch 16, **dadurch gekennzeichnet, dass** das Übergehäuse (37) mit einem Schirmelement (38) versehen ist und dass eines der Kondensatorteile mit dem Schirmelement (38) vorzugsweise über eine Federanordnung (39) leitend verbunden ist.

18. Möbel mit einer Ausstoßvorrichtung und mit einer Sensorvorrichtung nach einem der Ansprüche 14-17, **dadurch gekennzeichnet, dass** der Schieber (32) einteilig oder mehrteilig ausgestaltet ist.

19. Möbel mit einer Ausstoßvorrichtung und mit einer Sensorvorrichtung nach einem der Ansprüche 8-18, **dadurch gekennzeichnet, dass** die Auswertungsvorrichtung ein Auswertungs- und Steuerungsprogramm umfasst, das über geeignete Algorithmen Störungen wie Klopfgeräusche, elektromagnetische Störungen, Dauerbetätigungen oder Erschütterungen von gewollten Betätigungen unterscheidet und wobei die Auswertungsvorrichtung zur Ausgabe eines digitalen Signals (0/1) an die Ausstoßvorrichtung ausgelegt ist und/oder dass die Auswertungsvorrichtung über einen Feldbus an die Ausstoßvorrichtung gekoppelt ist.

## Claims

1. A piece of furniture, comprising an ejecting apparatus and a sensor apparatus for sensing a movement of a furniture part (1) which is movable relative to a stationary furniture body (2) in order to trigger the ejecting apparatus (10) for the movable furniture part, **characterized in that**
a) the sensor apparatus comprises a housing (14) and a sensor plunger (15) which is movable relative thereto and which is provided with at least one movable part of a transformer or capacitor that otherwise is arranged in an entirely or partly immobile stationary manner in the housing (14), or forms such a transformer or capacitor, and
b) the sensor plunger (15) is movable parallel or at least approximately parallel to the opening or closing direction of the movable furniture part (1) on the housing (14) of the sensor apparatus (12).

2. A piece of furniture, comprising an ejecting apparatus and a sensor apparatus according to claim 1, **characterized in that**
- the movable furniture part is a drawer (8);
- the ejecting apparatus (10) and the sensor apparatus are arranged separate from each other between the rear wall (13) of the drawer and the rear wall (4) of the furniture body, or that the sensor apparatus is integrated in the housing of the ejecting apparatus;
- the sensor plunger (15) is movable parallel or at least approximately parallel to the pull-out direction of the drawer on the housing (14) of the sensor apparatus (12), and
- the sensor apparatus (12) is formed for sensing an actuation stroke X which is exerted by the front panel of the drawer on the drawer (8), and
- the housing (14) is fixed in a stationary manner to the rear wall of the furniture body, and the sensor plunger (15), which is movable relative to the housing (14), is arranged on the side of the housing (14) facing the drawer and strikes the drawer in the closed state so that the sensor plunger follows pressure or pulling movements of the drawer (8) in the closed state.

3. A piece of furniture, comprising an ejecting apparatus and a sensor apparatus according to claim 1 or 2, **characterized in that** the sensor apparatus (12) is formed for sensing an actuating stroke of less than 1/10 mm, preferably less than 5/100 mm, especially less than 2/100 mm.

4. A piece of furniture, comprising an ejecting apparatus and a sensor apparatus according to one of the preceding claims, **characterized in that** the sensor plunger (15) is preferably supported in a resilient manner via a support plate (16) in the housing (14) of the sensor apparatus (12).

5. A piece of furniture, comprising an ejecting apparatus and a sensor apparatus according to one of the preceding claims, **characterized in that** an adjusting means (20) is adjustably arranged on the sensor plunger, especially via a thread.

6. A piece of furniture, comprising an ejecting apparatus and a sensor apparatus according to one of the preceding claims, **characterized in that** the adjusting means (20) is arranged on the free end or on the end of the sensor plunger (15) facing the movable furniture part for changing the axial length of said element.

7. A piece of furniture, comprising an ejecting apparatus and a sensor apparatus according to one of the preceding claims, **characterized in that** the sensor plunger (15) comprises a ferrite core part (21) as a movable part of the coil directly or on a support plate (16), and a coil body (22) is fixed in the housing (14), said coil body carrying in the manner of a transformer two axially mutually spaced coils, of which one is used as a primary winding (23) and the other as a secondary winding (24), wherein the primary winding (23) is surrounded by a further ferrite core part (26), and wherein the arrangement is such that the secondary winding (24) receives its magnetic field circuit by the immersing ferrite core part (21), and wherein the components of primary winding (23), secondary winding (24) and ferrite core parts (21, 26) form a transformer whose electromagnetic properties depend on the penetration depth of the ferrite core (21) on the sensor plunger (15).

8. A piece of furniture, comprising an ejecting apparatus and a sensor apparatus according to one of the preceding claims, **characterized in that** the stationary part of the coil body is arranged in the housing (14) on a circuit board (30), which preferably also carries an electronic circuit with a control apparatus and an evaluation apparatus for the output of a signal to the ejecting apparatus.

9. A piece of furniture, comprising an ejecting apparatus and a sensor apparatus according to one of the preceding claims, **characterized in that** the ferrite core consists ferrite core parts (21, 26) which are movable relative to each other.

10. A piece of furniture, comprising an ejecting apparatus and a sensor apparatus according to one of the preceding claims, **characterized in that** the primary winding (23) can preferably be supplied in operation with a high-frequency alternating voltage so that an alternating voltage induced into the secondary winding (24) is dependent with respect to its signal amplitude from the penetration depth of the sensor plunger.

11. A piece of furniture, comprising an ejecting apparatus and a sensor apparatus according to one of the preceding claims, **characterized in that** the sensor plunger (15) comprises a metal surface (27) as the movable part of the capacitor, which metal surface is movable relative to, and preferably parallel to, a metal surface (28) fixed in the housing.

12. A piece of furniture, comprising an ejecting apparatus and a sensor apparatus according to one of the preceding claims, **characterized in that** the capacitor is a variable plate capacitor whose capacitance depends on the covering area of the two metal plates (27, 28).

13. A piece of furniture, comprising an ejecting apparatus and a sensor apparatus according to one of the preceding claims, **characterized in that** the stationary part of the capacitor is arranged in the housing (14) on a circuit board (30), which preferably also carries an electronic circuit with a control apparatus and an evaluation apparatus or circuit for the output of a signal to the ejecting apparatus.

14. A piece of furniture, comprising an ejecting apparatus and a sensor apparatus according to one of the preceding claims, **characterized in that** the capacitor comprises a slide (32) as a sensor plunger and a first capacitor part and a second capacitor part (36), wherein the slide (32) is movably accommodated as a first capacitor part in a housing (33) with a slot (34), and the housing (33) is enclosed in full or in part by the second capacitor part (36).

15. A piece of furniture, comprising an ejecting apparatus and a sensor apparatus according to claim 14, **characterized in that** the slide encloses a housing as the first capacitor part, wherein it is displaceable on the housing, and the second capacitor part is arranged in the housing.

16. A piece of furniture, comprising an ejecting apparatus and a sensor apparatus according to claim 14 or 15, **characterized in that** the first and/or the second capacitor part (32, 36) are formed as a punched and folded parts made of sheet metal, and the first and the second capacitor part (32, 36) and the housing (33) are arranged in an enclosure (37) which is open towards at least one side.

17. A piece of furniture, comprising an ejecting apparatus and a sensor apparatus according to claim 16, **characterized in that** the enclosure (37) is provided with a shielding element (38), and one of the capacitor parts is conductively connected to the shielding element (38) preferably via a spring arrangement (39).

18. A piece of furniture, comprising an ejecting apparatus and a sensor apparatus according to one of the claims 14 to 17, **characterized in that** the slide (32) is formed in an integral or multipart manner.

19. A piece of furniture, comprising an ejecting apparatus and a sensor apparatus according to one of the claims 8 to 18, **characterized in that** the evaluation apparatus comprises an evaluation and control program which distinguishes, via suitable algorithms, disturbances such as knocking noises, electromagnetic interferences, permanent actuations or vibrations from intended actuations, and wherein the evaluation apparatus is formed for the output of a digital signal (0/1) to the ejecting apparatus, and/or the evaluation apparatus is coupled via a field bus to the ejecting apparatus.

## Revendications

1. Meuble avec un dispositif de déploiement et un dispositif détecteur pour détecter un mouvement d'une partie de meuble (1) mobile par rapport à un corps de meuble (2) fixe et pour commander le dispositif de déploiement (10) pour la partie de meuble mobile, **caractérisé en ce que**
a. le dispositif détecteur présente un boîtier (14) et un poussoir détecteur (15) mobile par rapport audit boîtier, et pourvu d'au moins une pièce mobile d'un transformateur ou condensateur par ailleurs entièrement ou partiellement immobile dans le boîtier (14) ou bien constitue un tel boîtier, et
b. le poussoir détecteur (15) est mobile, parallèle ou du moins approximativement parallèle à la direction d'ouverture ou de fermeture de la partie mobile au boîtier (14) du dispositif détecteur (12).

2. Meuble avec un dispositif de déploiement et un dispositif détecteur selon revendication 1, **caractérisé en ce que**
- la partie de meuble mobile est un tiroir (8)
- le dispositif de déploiement (10) et le dispositif détecteur sont montés séparés l'un de l'autre entre la paroi arrière (13) du tiroir et la paroi arrière (4) du corps de meuble, ou **en ce que** le dispositif détecteur est intégré dans le boîtier du dispositif de déploiement,
- le poussoir détecteur (15) est mobile, parallèle ou du moins approximativement parallèle à la direction d'extraction du tiroir au boîtier (14) du dispositif détecteur (12), et
- le dispositif détecteur (12) est disposé pour détecter une couse d'actionnement X qui est exercée du panneau frontal du tiroir vers le tiroir (8), et
- le boîtier (14) est attaché de manière fixe à la paroi arrière du corps, et **en ce que** le poussoir détecteur (15) mobile par rapport au boîtier (14) est agencé sur le côté tourné vers le tiroir du boîtier (14), et poussé sur le tiroir à l'état fermé de manière à ce que le poussoir détecteur suive à l'état fermé les mouvements de pression ou de traction du tiroir (8).

3. Meuble avec un dispositif de déploiement et un dispositif détecteur selon la revendication 1 ou 2, **caractérisé en ce que** le dispositif détecteur (12) est disposé pour détecter une course d'actionnement inférieure à 1/10 mm, de préférence inférieure à 5/100 mm, plus particulièrement inférieure à 2/100 mm.

4. Meuble avec un dispositif de déploiement et un dispositif détecteur selon l'une des revendications susmentionnées, **caractérisé en ce que** le poussoir détecteur (15) est soutenu de préférence par une plaque support (16) sur ressort dans le boîtier (14) du dispositif détecteur (12).

5. Meuble avec un dispositif de déploiement et un dispositif détecteur selon l'une des revendications susmentionnées, **caractérisé en ce qu'**un moyen de réglage (20) réglable est agencé plus particulièrement via filetage, au poussoir détecteur.

6. Meuble avec un dispositif de déploiement et un dispositif détecteur selon l'une des revendications susmentionnées, **caractérisé en ce que** le moyen de réglage (20) est agencé à l'extrémité libre ou à l'extrémité - tournée vers la partie de meuble mobile - du poussoir détecteur (15) pour modifier la longueur axiale de cet élément.

7. Meuble avec un dispositif de déploiement et un dispositif détecteur selon l'une des revendications susmentionnées, **caractérisé en ce que** le poussoir détecteur (15) présente une pièce de noyau de ferrite (21) en tant que partie mobile de bobine directement ou à une plaque support (16), et **en ce qu'**il est fixé dans le boîtier (14) un corps de bobine (22) qui, à la manière d'un transformateur, porte deux bobines espacées axialement, dont l'une sert d'enroulement primaire (23) et l'autre d'enroulement secondaire (24), où l'enroulement primaire (23) est entouré par une autre pièce de noyau de ferrite (26), et où l'agencement est de telle sorte que l'enroulement secondaire (24) reçoit son obturateur magnétique par la pièce de noyau de ferrite (21) immergée, et où les éléments de construction - enroulement primaire (23), enroulement secondaire (24) et pièces de noyaux de ferrite (21, 26) - forment un transformateur dont les propriétés électromagnétiques dépendent de la profondeur de pénétration du noyau de ferrite (21) à la tige de détection (15).

8. Meuble avec un dispositif de déploiement et un dispositif détecteur selon l'une des revendications susmentionnées, **caractérisé en ce que** la partie fixe du corps de bobine dans le boîtier (14) est agencée sur une carte imprimée (30), qui porte de préférence aussi un circuit électronique avec un dispositif de commande et un dispositif d'évaluation pour émettre un signal au dispositif de déploiement.

9. Meuble avec un dispositif de déploiement et un dispositif détecteur selon l'une des revendications susmentionnées, **caractérisé en ce que** le noyau de ferrite est composé des pièces du noyau de ferrite (21, 26) qui sont mobiles les unes par rapport aux autres.

10. Meuble avec un dispositif de déploiement et un dispositif détecteur selon l'une des revendications susmentionnées, **caractérisé en ce que** l'enroulement primaire (23) est alimentable en fonctionnement de préférence avec une tension alternative haute fréquence de telle façon qu'une tension alternative induite dans l'enroulement secondaire (24) dans l'amplitude de signal de ladite tension, est dépendante de la profondeur de pénétration du poussoir détecteur.

11. Meuble avec un dispositif de déploiement et un dispositif détecteur selon l'une des revendications susmentionnées, **caractérisé en ce que** le poussoir détecteur (15) présente, en tant que partie mobile du condensateur, une surface métallique (27) qui est mobile - de préférence parallèlement - par rapport à une surface métallique (28) fixée dans un boîtier.

12. Meuble avec un dispositif de déploiement et un dispositif détecteur selon l'une des revendications susmentionnées, **caractérisé en ce que** le condensateur est un condensateur à plaques variable, dont la capacité dépend de la zone de recouvrement des deux plaques métalliques (27, 28).

13. Meuble avec un dispositif de déploiement et un dispositif détecteur selon l'une des revendications susmentionnées, **caractérisé en ce que** la partie fixe du condensateur dans le boîtier (14) est agencée sur une carte imprimée (30), qui porte de préférence aussi un circuit électronique avec un dispositif de commande et un dispositif ou circuit d'évaluation pour émettre un signal au dispositif de déploiement.

14. Meuble avec un dispositif de déploiement et un dispositif détecteur selon l'une des revendications susmentionnées, **caractérisé en ce que** le condensateur présente une glissière (32) en tant que poussoir détecteur et première pièce de condensateur, ainsi qu'une deuxième pièce de condensateur (36), où la glissière (32) est accueillie en mouvement en tant que première partie du condensateur dans un boîtier (33) avec une fente (34) ; et le boîtier est encastré, entièrement ou partiellement, par la deuxième pièce de condensateur (36).

15. Meuble avec un dispositif de déploiement et un dispositif détecteur selon la revendication 14, **caractérisé en ce que** la glissière, en tant que première partie du condensateur, encastre un boîtier ; ladite glissière étant coulissante au boîtier, et **en ce que** la deuxième pièce de condensateur est agencée dans le boîtier.

16. Meuble avec un dispositif de déploiement et un dispositif détecteur selon la revendication 14 ou 15, **caractérisé en ce que** la première et/ou la deuxième pièce de condensateur (32, 36) sont formées en tant que parties estampées ou pliées en tôle, et **en ce que** la première ou la deuxième pièce de condensateur (32, 36) et le boîtier (33) sont agencés dans un sur-boîtier (37) ouvert sur au moins un côté.

17. Meuble avec un dispositif de déploiement et un dispositif détecteur selon la revendication 16, **caractérisé en ce que** le sur-boîtier (37) est pourvu d'un élément de blindage (38), et **en ce que** l'une des pièces de condensateur est reliée de manière électrique à l'élément de blindage (38) de préférence via un arrangement à ressort (39).

18. Meuble avec un dispositif de déploiement et un dispositif détecteur selon l'une des revendications 14-17, **caractérisé en ce que** la glissière (32) est conçue en une pièce ou en plusieurs pièces.

19. Meuble avec un dispositif de déploiement et un dispositif détecteur selon l'une des revendications 8-18, **caractérisé en ce que** le dispositif d'évaluation comprend un programme d'évaluation et de commande qui distingue les algorithmes de dérangements adaptés comme les tapotements, les dérangements électromagnétiques, les actionnements en continu ou les vibrations d'actionnements voulues, et où le dispositif d'évaluation est disposé pour émettre un signal numérique (0/1) au dispositif de déploiement et/ou **en ce que** le dispositif d'évaluation est couplé via un bus de terrain au dispositif de déploiement.
